# EUROPEAN PATENT APPLICATION

(11) **EP 4 716 025 A1**
(43) Date of publication of application: **25.03.2026**
(21) Application number: 25202392.4
(22) Date of filing: 16.09.2025
(51) Int. Cl.: H01R 24/54, H04N 23/00, B60R 11/04, H01R 24/50, H01R 13/6583, H01R 12/70, H01R 13/52

(54) **ELECTRICAL CONNECTOR**

(30) Priority: 24.09.2024 JP 2024165233
(71) Applicant: Hosiden Corporation, Yao-shi, Osaka 581-0071 (JP)
(72) Inventor: KAWANISHI, Takahide, Yao-shi, 5810071 (JP)
(74) Representative: LBP Lemcke, Brommer & Partner Patentanwälte mbB

(57) **Abstract**

A connector (60) includes: an electrically conductive terminal (61); an electrically insulating holder (62) in which the terminal (61) is fitted and which holds the terminal (61); an electrically conductive cylindrical shell (63) covering the holder (62) from outside; and an electrically conductive shield (65) in electric contact with the cylindrical shell (63). The shield (65) includes: a cylinder body (65a) facing the cylindrical shell (63); and a plurality of bent pieces (65b) each extending from an end of the cylinder body (65a) and bent radially outward. The cylindrical shell (63) includes: a cylindrical body (63a) covering the holder (62); and an annular flange (63b) radially outward of the cylindrical body (63a). The plurality of bent pieces (65b) each include at a leading end a raised cut (65d) locked to the flange (63b) for the shield (65) to be held by the cylindrical shell (63).

## Description

### TECHNICAL FIELD

This disclosure relates to a connector.

### RELATED ART

A traditional plug may include a receptacle electrically connected to a substrate and a connector coaxially and electrically connected to the receptacle. Such a plug is disclosed in, for example, JP 2022-174604 A below.

JP 2022-174604 A discloses a plug ("coaxial connector" in the document) including a connector ("plug") and a receptacle. The connector includes a bar-shaped electrically conductive first contact, an insulating holder holding the first contact as inserted therein, an electrically conductive first cylindrical shell covering the holder from outside, and an electrically conductive shield in contact with the first cylindrical shell to block external electromagnetic waves. The receptacle includes an electrically conductive second contact electrically connected to a substrate and coaxially and electrically connectable to the first contact, an insulating casing containing the second contact, and an electrically conductive second cylindrical shell covering the casing from outside. The shield includes a barrel in contact with the first cylindrical shell, elastically deformable first bent sections extending from the barrel and curved radially outward, and second bent sections extending from the respective first bent sections and curved radially inward. The barrel includes a barrel body in contact with ring-shaped depressions in a cylindrical end of the first cylindrical shell and bent pieces extending from an end of the barrel body and bent radially outward. The bent pieces each have an end in contact with an inner end surface of a block section of a metal housing ("plug casing") which inner end surface is located toward an opening.

### SUMMARY

The plug disclosed in JP 2022-174604 A includes a shield including a cylinder body with two or more pressed protrusions pressed radially inward by press working into contact with respective outer surfaces of ring-shaped depressions in a cylindrical end of the first cylindrical shell. The pressed protrusions are arranged circumferentially at regular intervals in correspondence with the respective bent pieces. The barrel body is in close contact with the outer surface of the cylindrical end. The bent pieces each have an end in contact with an inner end surface of the housing which inner end surface is located toward an opening. This locks the shield with the first cylindrical shell. As described above, the bent pieces are in contact with the housing, whereas the barrel body, which includes two or more pressed protrusions, is in contact with the outer surface of the cylindrical end. This causes the housing, the first cylindrical shell, and the shield to be locked with and electrically connected to one another. Electronic components including such a plug are desirably compact and low-profile when mounted in a vehicle in order to be fitted in a designated space in the vehicle and save fuel consumption (electricity consumption in electric vehicles).

The above circumstances have led to a demand for a compact, low-profile connector.

A connector as an embodiment of this disclosure is a connector to which a coaxial cable is electrically connectable, the connector including: an electrically conductive terminal electrically connectable to an inner conductor of the coaxial cable; an electrically insulating holder in which the terminal is fitted and which holds the terminal; an electrically conductive cylindrical shell electrically connectable to an outer conductor of the coaxial cable and covering the holder from outside; and an electrically conductive shield in electric contact with the cylindrical shell to block an external electromagnetic wave, the shield including: a cylinder body facing the cylindrical shell; and a plurality of bent pieces each extending from an end of the cylinder body and bent radially outward, the cylindrical shell including: a cylindrical body covering the holder; and an annular flange radially outward of the cylindrical body, the plurality of bent pieces each including at a leading end a raised cut locked to the flange for the shield to be held by the cylindrical shell.

With the above configuration, the shield includes bent pieces each extending from an end of the cylinder body and bent radially outward. This allows the shield to be small in the radial direction. The bent pieces each have a leading end with a raised cut. This allows the cylinder body to be small along the axis. Locking the raised cuts to the flange allows the shield to be held by the cylindrical shell. The connector is therefore compact and low-profile.

A connector as another embodiment of this disclosure is further configured such that the cylindrical shell further includes a plurality of couplers disposed radially outward of the cylindrical body and arranged circumferentially at regular intervals, the flange is coupled to the cylindrical body with the plurality of couplers in-between, and the plurality of bent pieces are elastically deformed into contact with the plurality of couplers for the shield to be electrically connected to the cylindrical shell.

The above configuration allows the cylindrical body to hold the flange with use of the couplers equally along the circumference, and also ensures electrical connection between the shield and the cylindrical shell.

A connector as another embodiment of this disclosure is further configured such that the plurality of bent pieces are each between two of the plurality of couplers which two are circumferentially adjacent to each other.

The above configuration eliminates the need for the connector to be large in the radial direction for the attachment of the shield, and allows the connector to be compact.

### BRIEF DESCRIPTION OF DRAWINGS

Fig. 1 is a diagram schematically illustrating the configuration of a camera unit including a connector as an embodiment.
Fig. 2 is a vertical cross-sectional view of a socket with a receptacle of a camera module fitted with a connector included in the socket.
Fig. 3 is an exploded perspective view of a socket.
Fig. 4 provides a plan view and front view of a connector.
Fig. 5 is a cross-sectional view taken along line V-V in Fig. 4.

### DESCRIPTION OF EMBODIMENTS

The description below deals in detail with connectors as embodiments of this disclosure with reference to drawings. The embodiments described below are merely example connectors; this disclosure is not limited to the embodiments. The connector according to this disclosure may be embodied variously without departing from the scope of this disclosure.

The present embodiment is a connector 60 included in a socket 100 included in a camera unit U mountable in a vehicle (that is, an in-vehicle camera). The camera unit U may alternatively be mounted in, for example, a bicycle or a drone other than a vehicle.

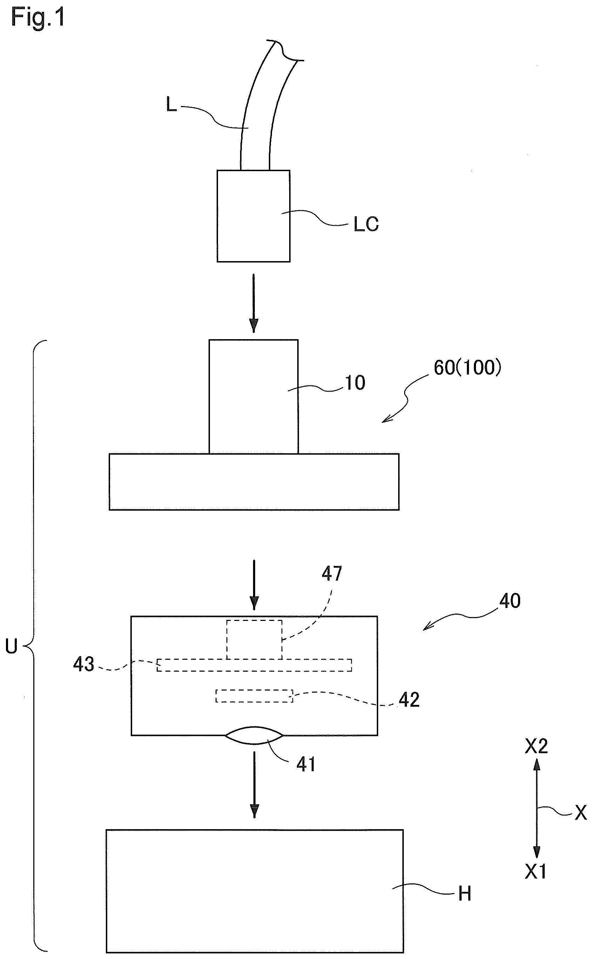

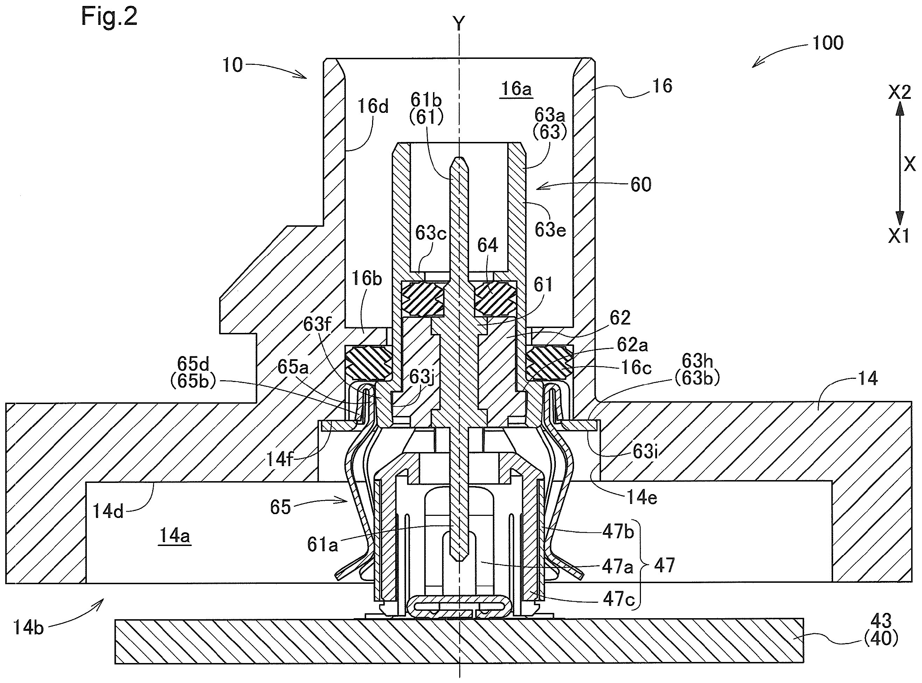

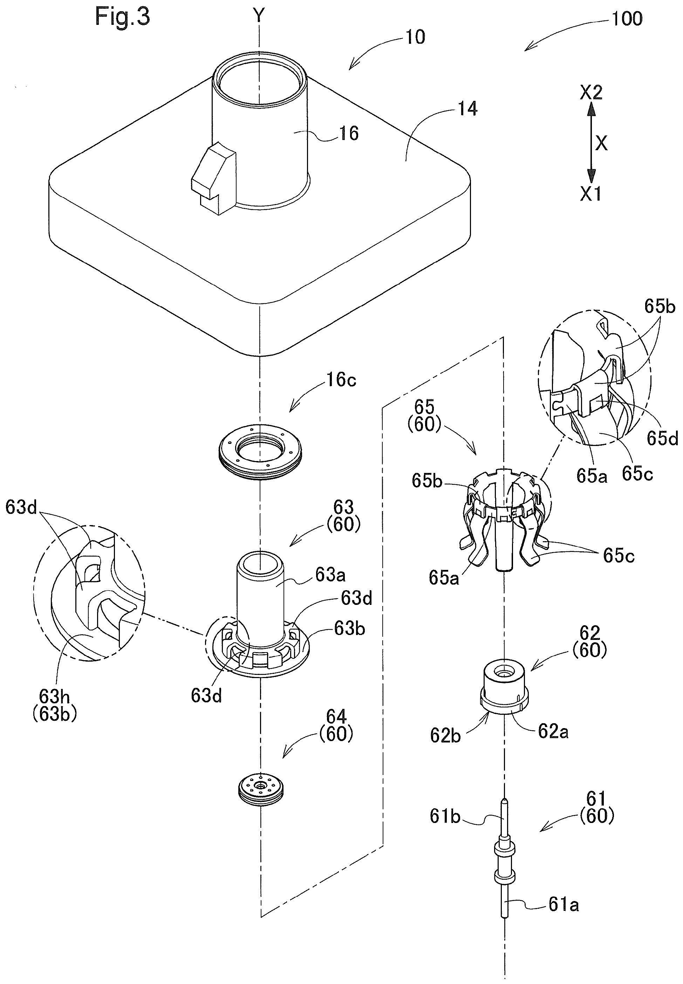

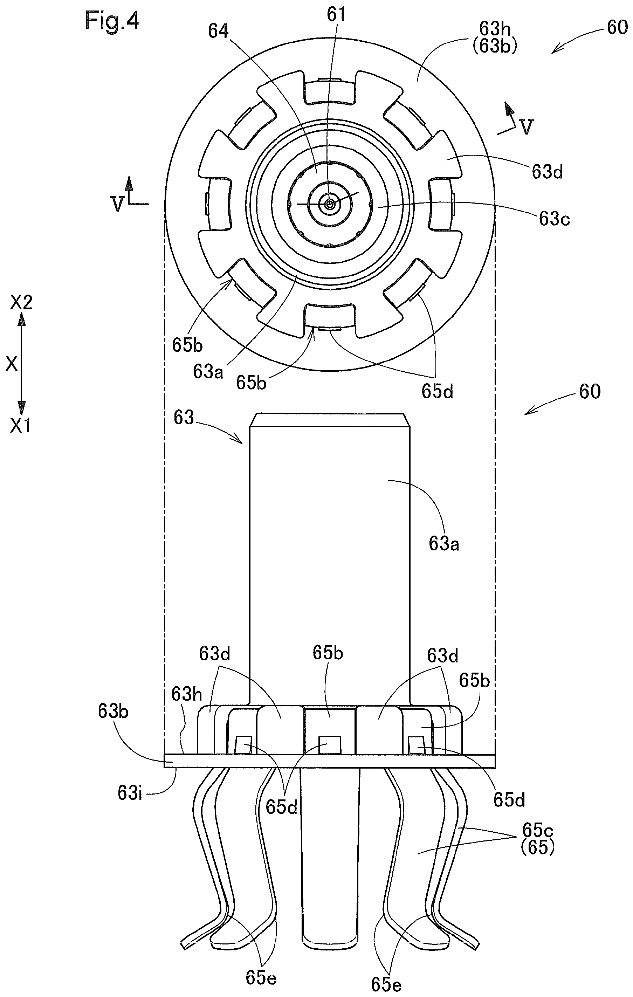

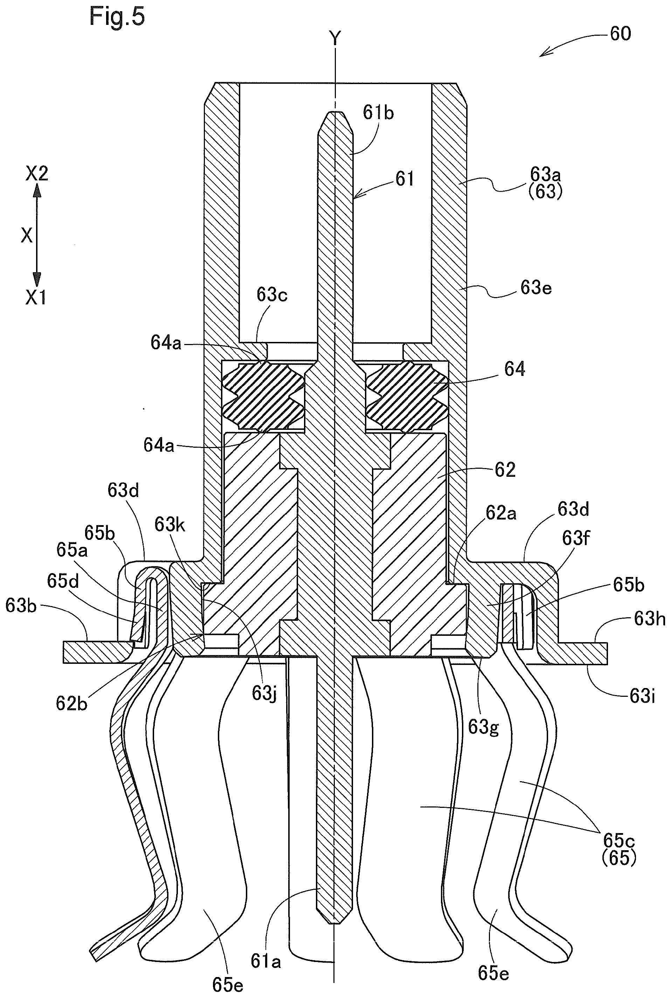

Fig. 1 is a diagram schematically illustrating the configuration of a camera unit U including a connector 60 as the present embodiment. Fig. 2 is a vertical cross-sectional view of a socket 100 with a receptacle 47 of a camera module 40 fitted with a connector 60 included in the socket 100. Fig. 3 is an exploded perspective view of the socket 100. Fig. 4 is a plan view and front view of the connector 60. Fig. 5 is a cross-sectional view of the connector 60 taken along line V-V in Fig. 4. The left half of Fig. 5 shows a cross section taken along a line extending through a raised cut 65d of a cylindrical shell 63 described later, whereas the right half of it shows a cross section taken along a line extending through a coupler 63d of the cylindrical shell 63.

### [Configuration of Camera Unit]

As illustrated in Fig. 1, the camera unit U is electrically connectable to a monitor (not illustrated in the drawings) or in-vehicle electronic control unit (ECU) with use of a coaxial cable L.

The coaxial cable L is a communication cable for transmitting high-frequency signals. The coaxial cable L includes an inner conductor, an outer conductor coaxial with the inner conductor, and a dielectric (insulator) therebetween. The inner conductor is in the form of a bundle of copper wires. The outer conductor is in the form of a mesh of copper wires around the inner conductor, and functions as a shield for preventing exit of high-frequency signals and entry of electric waves. The coaxial cable L transmits high-frequency signals from the camera unit U to the monitor or in-vehicle ECU, and electric power from the monitor or in-vehicle ECU to the camera unit U. The coaxial cable L has a leading end provided with a plug LC through which the coaxial cable L is electrically connectable to the connector 60.

The camera unit U includes a camera housing H, a camera module 40 in the camera housing H, and a socket 100 connected to the camera module 40. The camera housing H is made of an electrically conductive metal. The camera unit U is usable in any orientation. The description below uses the expression "axis X" to refer to the axis connecting the camera module 40 to the socket 100, "direction X1" to refer to the direction from the socket 100 to the camera module 40, and "direction X2" to refer to the direction opposite to the direction X1.

### [Configuration of Camera Module]

The camera module 40, as illustrated in Fig. 1, includes an optical system 41, an imaging element 42, and a substrate 43. The optical system 41 includes at least one lens configured to receive light from an object. The imaging element 42 is, for example, a charge coupled device (CCD) or complementary metal oxide semiconductor (CMOS) device configured to output electric signals based on light collected by the optical system 41. The substrate 43 supports thereon an electronic circuit configured to drive the imaging element 42 and process the electric signals from the imaging element 42. The camera module 40 includes a receptacle 47 disposed on the substrate 43 and configured to output high-frequency signals resulting from the electronic circuit processing the electric signals.

The receptacle 47, as illustrated in Fig. 2, includes a first contact 47a, a ground contact 47b, and an insulator 47c. The first contact 47a transmits high-frequency signals. The ground contact 47b is electrically connected to a ground wire disposed on the substrate 43 and having a ground potential. The insulator 47c electrically insulates the first contact 47a from the ground contact 47b.

### [Configuration of Connector]

The description below deals with the configuration of the connector 60 as the present embodiment with reference to Figs. 2 to 5. As illustrated in Figs. 2 and 3, the socket 100 includes a connector 60 and a housing 10. The housing 10 is made of an insulator such as resin. The housing 10 includes a barrel 14 in the form of a bottomed angular barrel and a fitting section 16 in the form of a cylinder extending from the bottom of the barrel 14 in the direction X2. The barrel 14 is in the shape of a rectangular barrel as viewed along the axis X (hereinafter also referred to as "plan view"). The description below uses the term "central axis Y" to refer to an axis parallel to the axis X and extending through the point of intersection of the diagonals of the rectangle in a plan view, "opening 14b" to refer to that end of the barrel 14 which is in the direction X1, and "internal space 14a" to refer to the space defined by the barrel 14 and connected to the opening 14b.

The barrel 14 has a first bottom surface 14d at an end of the internal space 14a in the direction X2 (that is, at a bottom portion). The barrel 14 has a depression 14e disposed at the center of the first bottom surface 14d, depressed in the direction X2, and having a circular shape in a plan view. The barrel 14 has a second bottom surface 14f at an end of the depression 14e in the direction X2 (that is, at a bottom portion). The fitting section 16 extends from the second bottom surface 14f in the direction X2. The fitting section 16 has an internal space 16a connected to the internal space 14a and the depression 14e. The fitting section 16 has an inner surface 16d, and includes in the internal space 16a a first support 16b protruding radially inward from the inner surface 16d in the form of a ring-shaped plate. The connector 60 is disposed in the housing 10, extends from the internal space 14a through the first support 16b into the internal space 16a, and has an axis that coincides with the central axis Y.

As illustrated in Figs. 2, 3, and 5, the connector 60 includes a signal terminal 61 (which is an example terminal), a holder 62, a cylindrical shell 63, a first bush 64, and a connection member 65 (which is an example shield). The signal terminal 61 is in the form of a bar made of a material such as an electrically conductive metal. The signal terminal 61 extends along the axis X and has an axis that coincides with the central axis Y. The signal terminal 61 has a first contact end 61a disposed in the direction X1 and electrically connectable to the first contact 47a of the receptacle 47 of the camera module 40 and a second contact end 61b disposed in the direction X2 and electrically connectable to the inner conductor of the coaxial cable L through the plug LC. The holder 62 is made of resin and disposed on an outer surface of an intermediate portion of the signal terminal 61 along the axis X. The holder 62 is insert-molded to be integral with the signal terminal 61, meaning that the signal terminal 61 is inserted in and held by the holder 62. The holder 62 is in the form of a barrel through the center of which the signal terminal 61 extends. The holder 62 includes an integral stopper 62a near its end in the direction X1 and with an outer diameter larger than that of the remaining portion. The first bush 64 is in the form of a ring-shaped plate made of an elastic material such as rubber, and has at the center a through hole extending along the axis X through which through hole the signal terminal 61 is insertable. The first bush 64 prevents, for example, entry of water at the second contact end 61b into the connector 60.

The cylindrical shell 63 is made of an electrically conductive metal and electrically connectable to the outer conductor of the coaxial cable L. The cylindrical shell 63 covers the holder 62 from outside; stated differently, the holder 62 is inserted (or fitted) in the cylindrical shell 63. The cylindrical shell 63 includes a cylindrical body 63a in the form of a substantial cylinder, a flange 63b in the form of a ring-shaped plate radially outward of the cylindrical body 63a , and couplers 63d coupling the flange 63b to the cylindrical body 63a. The cylindrical body 63a is coupled to the flange 63b not directly but with the couplers 63d in-between. The cylindrical body 63a includes a small-diameter section 63e to which the plug LC is connectable and a large-diameter section 63f disposed in the direction X1 relative to the small-diameter section 63e and having a diameter larger than the small-diameter section 63e. The small-diameter section 63e has a dimension along the axis X which dimension is larger than the dimension of the large-diameter section 63f along the axis X. The small-diameter section 63e and the large-diameter section 63f have a boundary therebetween that is near the end of the cylindrical body 63a in the direction X1 and that has a step on each of the outer and inner surfaces. The large-diameter section 63f has an outer surface and an inner surface 63j each so inclined that the large-diameter section 63f has a diameter that decreases gradually from the boundary in the direction X1 (see Fig. 5).

The cylindrical shell 63 includes a second support 63c in the form of a plate extending radially inward from the inner surface of the small-diameter section 63e and having at the center a hole through which the signal terminal 61 is insertable. The first bush 64 is in the direction X1 relative to the second support 63c and in contact with the second support 63c. The holder 62 is in the direction X1 relative to the first bush 64. The holder 62 has an outer diameter substantially equal to that of the first bush 64. The second contact end 61b of the signal terminal 61 extends through the second support 63c and is exposed in the direction X2 relative to the second support 63c.

The couplers 63d, which couple the flange 63b to the cylindrical body 63a, extend radially outward from the end in the direction X2 of the outer surface of the large-diameter section 63f. The couplers 63d are bent partway by 90 degrees into the direction X1 and are each coupled at its leading end to the radially innermost portion of the upper surface 63h, that is, the end surface of the flange 63b in the direction X2. The cylindrical shell 63 includes two or more (eight for the present embodiment) couplers 63d arranged at regular intervals along the circumference of the large-diameter section 63f. The flange 63b has a lower surface 63i as its end surface in the direction X1. The lower surface 63i is slightly further in the direction X1 than the end surface 63g of the large-diameter section 63f in the direction X1 (see Fig. 5).

The connection member 65 is made of an elastic, electrically conductive metal. The connection member 65 includes a ring-shaped section 65a (which is an example cylinder body) in the form of a ring-shaped metal plate, first connection sections 65b (which is an example bent piece), and second connection sections 65c. The connection member 65 includes two or more (eight for the present embodiment) first connection sections 65b arranged at regular intervals along the circumference of the ring-shaped section 65a and extending along the axis X from the end of the ring-shaped section 65a in the direction X2. The connection member 65 includes two or more (eight for the present embodiment) second connection sections 65c arranged at regular intervals along the circumference of the ring-shaped section 65a and extending along the axis X from the end of the ring-shaped section 65a in the direction X1. The first connection sections 65b coincide with the respective second connection sections 65c in a plan view.

The metal plate as the ring-shaped section 65a has a surface parallel to the axis X and slightly apart from and facing the outer surface of the large-diameter section 63f. The ring-shaped section 65a is in no contact with the large-diameter section 63f. The first connection sections 65b extend from the end of the ring-shaped section 65a in the direction X2 and are bent radially outward by approximately 180 degrees. The first connection sections 65b coincide with the ring-shaped section 65a as viewed radially, that is, in a direction perpendicular to the central axis Y. The first connection sections 65b each have a leading end with a single raised cut 65d resulting from cutting a part of the leading end and raising the part (for example, by 5 to 20 degrees) radially outward for a slight inclination relative to the surface of the first connection section 65b. The connection member 65 includes eight raised cuts 65d as with the first connection sections 65b. The ring-shaped section 65a may alternatively be in contact with the large-diameter section 63f.

As illustrated in Fig. 4, the first connection sections 65b are each closely fitted between two couplers 63d adjacent to each other along the circumference of the cylindrical shell 63. The first connection sections 65b as a whole, excluding the respective raised cuts 65d, have an outermost diameter slightly smaller than the inner diameter of the flange 63b. The raised cuts 65d as a whole have an outermost diameter slightly larger than the inner diameter of the flange 63b. The raised cuts 65d allow the respective first connection sections 65b to be locked to the flange 63b and the connection member 65 to be held by the cylindrical shell 63, thereby preventing the connection member 65 from coming off the cylindrical shell 63. The first connection sections 65b each have a radially outward surface in elastic contact with the radially inward surface of the corresponding coupler 63d. This allows the connection member 65 to be electrically connected to the cylindrical shell 63 to block external electromagnetic waves.

The second connection sections 65c are each in the form of a plate extending in the direction X1 along the axis X from that end of the ring-shaped section 65a which is in the direction X1. Specifically, the second connection sections 65c are each in the shape of a wave along the axis X: They are so bent as to extend radially outward from the ring-shaped section 65a to expand, then radially inward to shrink, and finally radially outward again to expand. The second connection sections 65c each include a fourth contact 65e on a radially inward surface of the portion so bent as to extend radially outward again to expand.

As illustrated in Fig. 2, while the fitting section 16 is provided with a second bush 16c in contact with the small-diameter section 63e and the couplers 63d, the connector 60, as attached to the housing 10, holds the second bush 16c between the couplers 63d and the first support 16b. The small-diameter section 63e extends through the first support 16b in the direction X2. The second bush 16c is in the form of a ring-shaped plate made of an elastic material such as rubber, and is elastically deformable for the connector 60 to be fixed to the housing 10.

The connector 60 as the present embodiment includes first connection sections 65b each bent by approximately 180 degrees and parallel to the axis X. This allows the connection member 65 to be small in the radial direction. The first connection sections 65b each have a leading end with a raised cut 65d. This allows the ring-shaped section 65a to be small along the axis. Bringing the raised cuts 65d into contact with the flange 63b ensures electric connection between the connection member 65 and the cylindrical shell 63. This allows the connector 60 to be compact and ensures stable contact between components.

The connector 60 as the present embodiment includes a cylindrical shell 63 with a flange 63b coupled to the cylindrical body 63a through two or more couplers 63d disposed radially outward of the cylindrical body 63a and arranged circumferentially at regular intervals. This allows the cylindrical body 63a to hold the flange 63b with use of the couplers 63d equally along the circumference, and also ensures electrical conductivity between the cylindrical body 63a and the flange 63b.

The connector 60 as the present embodiment includes a connection member 65 with two or more first connection sections 65b each between two couplers 63d circumferentially adjacent to each other. This eliminates the need for the connector 60 to be large in the radial direction for the attachment of the connection member 65, and allows the connector 60 to be compact.

### [Method for Producing Socket]

The description below deals with a method for producing a socket 100 including the connector 60. The signal terminal 61 is formed by cutting, for example. The holder 62 is then insert-molded to be integral with the signal terminal 61. The cylindrical shell 63 is formed by cutting. The connection member 65 is formed with use of a pressing machine. The housing 10 is molded with use of a resin molding machine.

Next, the first bush 64, which is in the form of a ring-shaped plate, is inserted into the cylindrical shell 63 in the direction X2 to be in contact with the second support 63c. The signal terminal 61, which is integral with the holder 62, is inserted into the cylindrical shell 63 in the direction X2. The large-diameter section 63f and small-diameter section 63e of the cylindrical shell 63 are at this stage parallel to each other and not inclined as in Fig. 5. This allows the holder 62 to be inserted smoothly into the cylindrical shell 63 without being deformed. Inserting the signal terminal 61 elastically deforms the inner surface of the first bush 64 into close contact with the signal terminal 61 and brings the first bush 64 into contact with the holder 62 at a surface in the direction X1. This allows the first bush 64 to be in contact with the second support 63c at a surface in the direction X2 and held by and between the second support 63c and the holder 62 (see Fig. 5). The first bush 64 has an outer surface elastically deformed into close contact with the inner surface of the small-diameter section 63e. The stopper 62a of the holder 62 is in contact with a step 63k on the inner surface of the boundary between the small-diameter section 63e and the large-diameter section 63f. Then, plastically deforming the large-diameter section 63f for a diameter that decreases gradually in the direction X1 brings the corner 62b of the stopper 62a in the direction X1 into line contact with the inner surface 63j, which is inclined for the decreasing diameter (see Fig. 5). The stopper 62a is held by and between the step 63k and the inner surface 63j. This allows the signal terminal 61 to be held by and fixed to the cylindrical shell 63, and prevents the signal terminal 61 from coming off the cylindrical shell 63 in the direction X1.

Next, the connection member 65 is attached to the cylindrical shell 63 as follows: The connection member 65 is oriented such that the first connection sections 65b are each fitted between two couplers 63d adjacent to each other along the circumference of the cylindrical shell 63 (see Fig. 4). The connection member 65 is then pressed into the flange 63b in the direction X2. As described above, the first connection sections 65b as a whole, excluding the respective raised cuts 65d, have an outermost diameter slightly smaller than the inner diameter of the flange 63b. The raised cuts 65d as a whole have an outermost diameter slightly larger than the inner diameter of the flange 63b. The first connection sections 65b, excluding the respective raised cuts 65d, are not deformed as they pass through the flange 63b, whereas the raised cuts 65d are elastically deformed as they pass through the flange 63b. After passing through the flange 63b, the raised cuts 65d return to the original shape, so that the raised cuts 65d as a whole have an outer diameter larger than the inner diameter of the flange 63b, and are in contact with the upper surface 63h of the flange 63b. This finishes the attachment of the connection member 65 to the cylindrical shell 63 and hence the assembly of the connector 60.

Finally, the second bush 16c is so attached to the cylindrical shell 63 as to be in contact with the small-diameter section 63e and the couplers 63d. The second bush 16c has an inner surface elastically deformed into close contact with the outer surface of the small-diameter section 63e, and has a surface in the direction X1 which surface is in contact with the couplers 63d. The connector 60, to which the second bush 16c is attached as above, is inserted into the housing 10 through the opening 14b toward the fitting section 16. Specifically, the connector 60 is inserted such that the small-diameter section 63e extends through the first support 16b of the fitting section 16 and that the flange 63b has an upper surface 63h in contact with the second bottom surface 14f of the housing 10 (see Fig. 2). The second bush 16c has an outer surface elastically deformed into close contact with the inner surface 16d of the fitting section 16, so that the connector 60 is fixed to the housing 10. The second bush 16c has a surface in the direction X2 which surface is in contact with the first support 16b and held by and between the first support 16b and the couplers 63d. With the connector 60 attached to the housing 10, the cylindrical body 63a has a leading end in the internal space 16a of the fitting section 16.

### [Alternative Embodiments]

(1) The embodiment described above is configured such that the connection member 65 includes eight first connection sections 65b and that the cylindrical shell 63 includes eight couplers 63d. This disclosure is, however, not limited to such a configuration. The connection member 65 may include seven or fewer or nine or more first connection sections 65b, and the cylindrical shell 63 may include seven or fewer or nine or more couplers 63d, as long as the connection member 65 and the cylindrical shell 63 are electrically connected to each other in a reliable manner.
(2) The embodiment described above is configured such that the first connection sections 65b each include a single raised cut 65d. This disclosure is, however, not limited to such a configuration. The first connection sections 65b may each include two or more raised cuts 65d.
(3) The embodiment described above includes an elastically deformable second bush 16c to fix the connector 60 to the housing 10. This disclosure is, however, not limited to such a configuration. The connector 60 may be, for example, bonded to the housing 10.

## Claims

1. A connector (60) to which a coaxial cable (L) is electrically connectable,
the connector (60) comprising:
an electrically conductive terminal (61) electrically connectable to an inner conductor of the coaxial cable (L);
an electrically insulating holder (62) in which the terminal (61) is fitted and which holds the terminal (61);
an electrically conductive cylindrical shell (63) electrically connectable to an outer conductor of the coaxial cable (L) and covering the holder (62) from outside; and
an electrically conductive shield (65) in electric contact with the cylindrical shell (63) to block an external electromagnetic wave,
the shield (65) including:
a cylinder body (65a) facing the cylindrical shell (63); and
a plurality of bent pieces (65b) each extending from an end of the cylinder body (65a) and bent radially outward,
the cylindrical shell (63) including:
a cylindrical body (63a) covering the holder (62); and
an annular flange (63b) radially outward of the cylindrical body,
the plurality of bent pieces (65b) each including at a leading end a raised cut (65d) locked to the flange (63b) for the shield (65) to be held by the cylindrical shell (63).

2. The connector (60) according to claim 1, wherein
the cylindrical shell (63) further includes a plurality of couplers (63d) disposed radially outward of the cylindrical body (63a) and arranged circumferentially at regular intervals,
the flange (63b) is coupled to the cylindrical body (63a) with the plurality of couplers (63d) in-between, and
the plurality of bent pieces (65b) are elastically deformed into contact with the plurality of couplers (63d) for the shield to be electrically connected to the cylindrical shell (63).

3. The connector (60) according to claim 2, wherein
the plurality of bent pieces (65b) are each between two of the plurality of couplers (63d) which two are circumferentially adjacent to each other.
